# EUROPEAN PATENT SPECIFICATION

(11) **EP 3 010 143 B1**
(45) Date of publication and mention of the grant of the patent: **29.11.2017**
(21) Application number: 14188843.8
(22) Date of filing: 14.10.2014
(51) Int. Cl.: H02P 29/00, H02M 1/084, H02J 3/38, H02P 21/00, H02P 21/05

(54) **Method for controlling force ripples of a generator**
Verfahren zur Steuerung der Kraftwelligkeit eines Generators
Procédé de commande d'ondulation de force d'un générateur

(43) Date of publication of application: 20.04.2016
(73) Proprietor: Siemens Aktiengesellschaft, 80333 München (DE)
(72) Inventor: Deng, Heng, 7330 Brande (DK)

(56) References cited:
- EP-A1- 2 485 388
- EP-A1- 2 672 624
- EP-A2- 2 043 255
- T.C.Y. WANG ET. AL.: "Design of multiple reference frame PI controller for power converters", IEEE POWER ELECTRONICS SPECIALIST CONFERENCE, 2004, vol. 5, 25 June 2004 (2004-06-25), pages 3331-3335, XP002737554, Aachen ISSN: 0275-9306, DOI: 10.1109/PESC.2004.1355064 ISBN: 0-7803-8399-0

## Description

### Field of invention

The present invention relates to the field of wind turbines, more particular to the field of permanent magnet machines.

### Art Background

Acoustic noise and vibration of wind turbine generators are a great challenge especially with direct drive generators. In permanent magnet machines, acoustic noise and vibration can be excited by air gap torque ripples and radial force pressure ripples.

One approach is to design the generator appropriately to reduce harmonics in both air-gap torque and radial force pressure so that acoustic noise and vibration can be reduced. For example, torque ripples can be greatly reduced by using proper shaping of magnets. However, it is difficult to minimize both torque ripples and radial force pressure ripples by using a single design. Moreover, the performance of this approach is limited.

Another approach to reduce noise and vibration is to design mechanical parts of the generator, in such a way, that all resonance frequencies are out of the range that can be excited by torque and radial force pressure ripples.

However, due to the variable speed of such generators, the frequency range that can be excited by torque ripples and radial force pressure ripples is very wide. It is very difficult to avoid the whole frequency range due to the size and the cost limit of the generator. Relevant background art can be found in EP 2 485 388 A1. Hence, there is a need to improve new designed as well as already existing wind turbines in the view of acoustic noise and vibrations in an easy, reliable and more cost reducing manner.

### Summary of the Invention

This need may be met by the subject matter according to the independent claims. Advantageous embodiments of the present invention are described by the dependent claims.

Therefore, according to a first aspect of the invention it is provided a method for providing a harmonic current reference, in particular for controlling force ripples of a generator, the method comprising: Obtaining a first input signal indicative for a radial force ripple of a generator; obtaining a second input signal indicative for a reference harmonic radial force. Obtaining a third input signal indicative for a tangential force ripple of the generator; obtaining a fourth input signal indicative for a reference harmonic tangential force; obtaining a fifth input signal indicative for an electrical angle of the generator; determining a first internal signal, by filtering the first input signal with taking into account the fifth input signal, the first internal signal being indicative for a radial force ripple comprising a radial component at a certain harmonic of a generator current; determining a second internal signal by filtering the third input signal with taking into account the fifth input signal, the second internal signal being indicative for a tangential force ripple comprising a tangential component at the certain harmonic of the generator current; determining a first output signal by a first transformation procedure making use of the second input signal and the first internal signal, the first output signal being indicative for a certain harmonic current reference for a first axle of an synchronous rotating frame; and determining a second output signal, by a second transformation procedure making use of the fourth input signal and the second internal signal, the second output signal being indicative for a certain harmonic current reference for a second axle of the synchronous rotating frame.

Instead of using an electrical angle of the generator also an electrical frequency of the generator may be used.
The transformation procedure according to the invention may be a regulator procedure or a signal processing procedure as well.

The advantage of this concept is that torque ripples as well as radial force pressure ripples may be minimized.

This aspect of the invention is based on the idea that by measuring or estimating force ripples of the generator in a very efficient way and using them as a feedback source, both, torque ripples and radial force ripples may be minimized.

According to a further embodiment of the invention, the first transformation procedure comprises: determining a first error signal by subtracting the first internal signal from the second input signal, the first error signal being indicative for a regulation error of the first internal signal; and determining the first output signal by a third transformation procedure, making use of the first error signal. Moreover, the second transformation procedure comprises: determining a second error signal by subtracting the second internal signal from the fourth input signal, the second error signal being indicative for a regulation error of the second internal signal; and determining the second output signal by a fourth transformation procedure, making use of the second error signal.

According to a further preferred embodiment of the invention, the third transformation procedure comprises: splitting the first error signal into two identical split first error signals; providing a third internal signal by modifying a first of the two identical split first error signals; and determining the first output signal by a fifth transformation procedure, making use of the first error signal and the third internal signal. Moreover, the fourth transformation procedure comprises: Splitting the second error signal into two identical split second error signals; providing a fourth internal signal by modifying a first of the two identical split second error signals; and determining the second output signal by a sixth transformation procedure, making use of the second error signal and the fourth internal signal.

According to a further embodiment of the invention the fifth transformation procedure comprises: making use of the fifth input signal. Moreover, the sixth transformation procedure comprises: making use of the fifth input signal.

According to a further embodiment of the invention modifying the first of the two identical split first error signals comprises: applying a first phase shifting procedure, in particular a 90 degrees phase shifting procedure. Moreover, modifying the first of the two identical split second error signals comprises: applying a second phase shifting procedure, in particular a 90 degrees phase shifting procedure.

According to a further embodiment of the invention, the third transformation procedure comprises: applying a first trigonometric function. Moreover, the fourth transformation procedure comprises: applying a second trigonometric function.

According to a further embodiment of the invention the method moreover comprises: modifying the second of the two identical split first error signals; and modifying the second of the two identical split second error signals. Therein, modifying the second of the two identical split first error signals comprises applying a third trigonometric function, and modifying the second of the two identical split second error signals comprises applying a fourth trigonometric function.

According to a further embodiment of the invention the second trigonometric function equals the first trigonometric function; the fourth trigonometric function equals the third trigonometric function, and the third trigonometric function is different from the first trigonometric function.

According to a further embodiment of the invention the third transformation procedure comprises: resonance regulating the first error signal by applying a first transfer function to the first error signal. Moreover, the fourth transformation procedure comprises: resonance regulating the second error signal by applying a second transfer function to the second error signal.

According to a further embodiment of the invention the second transfer function equals the first transfer function.

According to a second aspect of the invention it is provided a force ripple control method for controlling force ripples of a generator, the force ripple control method comprising: performing a method for providing a certain harmonic current reference according to any of the claims according to the first aspect of the invention; and determining a third output signal and a fourth output signal depending on the fifth input signal, the first output signal, the second output signal and a set of current signals. Therein, the set of current signals is indicative for a first current, a second current, and a third current each generated by the generator. The third output signal is indicative for a harmonic voltage command for the first axle of the synchronous rotating frame. And the fourth output signal is indicative for a harmonic voltage command for the second axle of the synchronous rotating frame.
Moreover, the force ripple control method comprises: determining a seventh output signal by adding the third output signal to a fifth output signal. Therein, the fifth output signal is indicative for a first fundamental voltage command of a current controller of a frequency converter for the generator. The seventh output signal is indicative for a voltage command at the first axle of the synchronous rotating frame, for controlling a radial force ripple of the generator. Moreover, the force ripple control method comprises: determining an eighth output signal by adding the fourth output signal to a sixth output signal. Therein, the sixth output signal is indicative for a second fundamental voltage command of the current controller of the frequency converter for the generator. And the eighth output signal is indicative for a voltage command at the second axle of the synchronous rotating frame, for controlling a tangential force ripple of the generator.

This embodiment of the invention is based on the idea that a frequency converter may inject harmonic currents to the machine stator so that both, torque ripples and radial force ripples may be minimized. Therefore, this may aid in reducing acoustic noise and vibration of a permanent magnet machine, by minimizing torque ripples as well as radial force pressure ripples. Moreover, nearly no additional costs may be spent as the invention does allow for only minimal change requirements for hardware of available products already in the market.

According to a third aspect of the invention it is provided a harmonic current reference controller device for controlling force ripples of a generator, the harmonic current reference controller device comprising: a first input for obtaining a first input signal indicative for a radial force ripple of a generator; a second input for obtaining a second input signal indicative for a reference harmonic generator radial force; a third input for obtaining a third input signal indicative for a tangential force ripple of the generator; a fourth input for obtaining a fourth input signal indicative for a reference harmonic generator tangential force; a fifth input for obtaining a fifth input signal indicative for an electrical angle of the generator; and a first filter unit for determining a first internal signal by filtering the first input signal by taking into account the fifth input signal. Therein, the first internal signal is indicative for a radial force ripple comprising only a radial component at a certain harmonic of a generator current.
Moreover, the current reference controller device comprises: a second filter unit for determining a second internal signal by filtering the third input signal by taking into account the fifth input signal. Therein, the second internal signal is indicative for a tangential force ripple comprising only a tangential component at the certain harmonic of the generator current. Moreover, the current reference controller device comprises: a first transformation unit for determining a first output signal by a first transformation procedure making use of the second input signal and the first internal signal. Therein, the first output signal being indicative for a certain harmonic current reference for a first axle of a synchronous rotating frame.
Moreover, the current reference controller device comprises: A second transformation unit for determining a second output signal by a second transformation procedure making use of the fourth input signal and the second internal signal. Therein, the second output signal being indicative for a certain harmonic current reference for a second axle of the synchronous rotating frame.

This aspect of the invention is based on the idea that nearly no additional costs may be spent as the invention does allow for only minimal change requirements for hardware of available products already in the market, like a low cost harmonic current reference controller device as provided by the invention compared to the very high costs for manufacturing, transporting and assembling a wind turbine at its area of activity.

According to a further embodiment of the invention the device is adapted for performing a method for providing a harmonic current reference according to any of the claims according to the first aspect of the invention.

This embodiment of the invention is based on the idea that by applying the methods provided by the invention to the controller device, a very efficient way of providing minimizing of torque ripples and radial force ripples may be made available.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematically drawing of a state of the art variable speed wind turbine.
Figure 2 shows a schematically drawing of a state of the art generator-side controller of a frequency converter being part of the wind turbine shown in figure 1.
Figure 3 shows a schematically drawing of a proposed force ripple controller for a wind turbine as shown in figure 1 according to an exemplary embodiment of the invention.
Figure 4 shows a schematically drawing of a force ripple regulator of the force ripple controller as shown in figure 3 according to an exemplary embodiment of the invention.
Figure 5 shows a schematically drawing of a force ripple regulator of the force ripple controller as shown in figure 3 according to another exemplary embodiment of the invention.
Fig. 6 shows a schematically drawing of a force ripple regulator of the force ripple controller as shown in figure 3 according to another exemplary embodiment of the invention.
Fig. 7 shows a schematically drawing of a current controller as shown in figure 2 for controlling force ripples of the generator as shown in figure 1 together with two force ripple controllers according to an exemplary embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features, which have already been elucidated with respect to a previously described embodiment, are not elucidated again at a later position of the description.

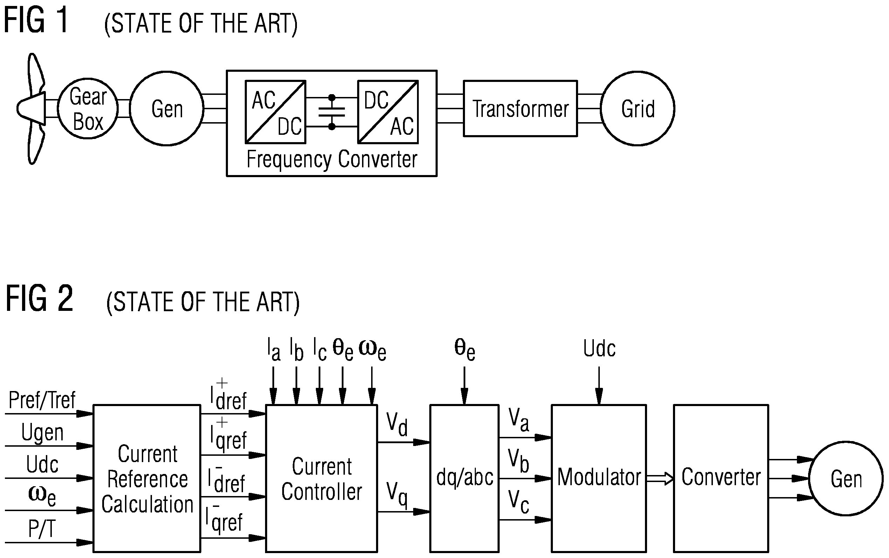

Figure 1 shows a schematically drawing of a state of the art variable speed wind turbine.
In figure 1 is shown: a variable speed wind turbine, which consists of a rotor, an optional gearbox, an ac-generator, a frequency converter and a transformer. The frequency converter is used to interface the ac-power from the generator to the power grid also shown in figure 1. The frequency converter has generator-side converter modules and grid-side converter modules with DC-link capacitors in between. Both generator-side converter modules and grid-side converter modules may be power electronics devices made of PWM-controlled IGBTs or other devices.

Figure 2 shows a schematically drawing of a state of the art generator-side controller of a frequency converter being part of the wind turbine shown in figure 1.

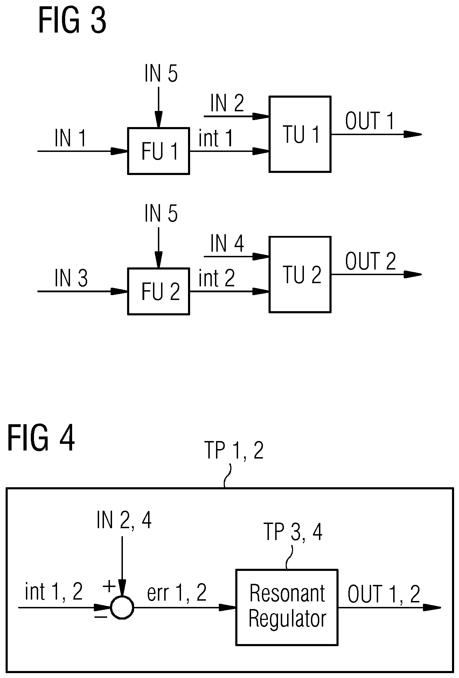

In figure 2 a current reference calculation block is used to provide a fundamental current reference for a synchronous rotating d-q frame of the generator. The input to the block may be for example a power/torque reference, a generator voltage, a dc link voltage and a power/torque as shown in figure 2. It is also possible to only use some combinations of these signals as inputs. Current references may be calculated based on a generator voltage controller values, like a maximum torque per ampere requirements and the like, depending on the application requirements. The Current Controller block in Figure 2 is a closed-loop feedback regulation of a generator current in the rotating d-q frame. For a better dynamic performance and decoupling, voltage feed-forward may also be used in this block. The present invention provided in this application may act as an add-on feature to such a current controller block. Exemplary embodiment details of the present invention, like a force ripple controller, an interacting of such a current controller block with a provided force ripple controller and corresponding underlying exemplary methods of the present invention are shown in figures 3 to 7.

Figure 3 shows a schematically drawing of a proposed force ripple controller for a wind turbine as shown in figure 1 according to an exemplary embodiment of the invention.
In figure 3 is shown: a harmonic current reference controller device for controlling force ripples of a generator, the controller device comprising: a first input for obtaining a first input signal IN1 indicative for a radial force ripple of a generator; a second input for obtaining a second input signal IN2 indicative for a reference harmonic generator radial force; a third input for obtaining a third input signal IN3 indicative for a tangential force ripple of the generator; a fourth input for obtaining a fourth input signal IN4 indicative for a reference harmonic generator tangential force; a fifth input for obtaining a fifth input signal IN5 indicative for an electrical angle of the generator; a first filter unit FU1 for determining a first internal signal int1 by filtering the first input signal IN1 by taking into account the fifth input signal IN5, the first internal signal int1 being indicative for a radial force ripple comprising only a radial component at a certain harmonic of a generator current; a second filter unit FU2 for determining a second internal signal int2 by filtering the third input signal IN3 by taking into account the fifth input signal IN5, the second internal signal int2 being indicative for a tangential force ripple comprising only a tangential component at the certain harmonic of the generator current; a first transformation unit TU1 for determining a first output signal OUT1 by a first transformation procedure TP1 (not shown in Figure 1) making use of the second input signal IN2 and the first internal signal int1, the first output signal OUT1 being indicative for a certain harmonic current reference for a first axle of a synchronous rotating frame; and a second transformation unit TU2 for determining a second output signal OUT2 by a second transformation procedure TP2 (not shown in Figure 1) making use of the fourth input signal IN4 and the second internal signal int2, the second output signal OUT2 being indicative for a certain harmonic current reference for a second axle of the synchronous rotating frame.
In figure 3 radial force ripples are controlled by the first output signal OUT1, which may be a harmonic current for the first axle of a synchronous rotating frame, which may be the d-axle, while tangential force ripples / torque ripples are controlled by the second output OUT2, which may be a harmonic current for the second axle of the synchronous rotating frame, which may be the q-axle. With this it may be possible to control every occurring Nth harmonic ripple force by one such harmonic current reference controller device. Therefore, the estimated/measured force/torque may pass an adaptive filter so that Nth harmonics in force/torque may be higher than harmonics at other frequencies. Thus, the Nth force/torque ripples and their commands (normally 0) may be inputs to the force ripple regulators. The force ripple regulators then may regulate force ripples to follow their commands by outputting proper harmonic current commands OUT1, OUT2, one for the Nth harmonic radial force ripple OUT 1, and one for the Nth harmonic torque force ripple OUT2, for each Nth harmonic force/torque ripples. Moreover, the device is adapted for performing a method for providing a harmonic current reference according to any of the provided methods according to the invention.

Figure 3 moreover shows the method comprising: filtering FU1 a radial force ripple IN1 of the generator by applying an electrical angle IN5 of the generator to the radial force ripple IN1, such as to receive a filtered radial force ripple int1 comprising only a radial component at a certain harmonic of a generator current; filtering a tangential force ripple IN3 of the generator by applying the electrical angle IN5 of the generator to the tangential force ripple IN3, such as to receive a filtered tangential force ripple int2 comprising only a tangential component at the certain harmonic of the generator current; regulating TU1 the filtered radial force ripple int1 by applying a reference certain harmonic generator radial force IN2 to the filtered radial force ripple int1, such as to receive a certain harmonic current reference OUT1 for a first axle of a synchronous rotating frame; and regulating the filtered tangential force ripple int2 by applying a reference certain harmonic generator tangential force IN4 to the filtered tangential force ripple int2, such as to receive a certain harmonic current reference OUT2 for a second axle of the synchronous rotating frame.

Figures 4, 5 and 6 each show another force ripple regulator unit as the first and the second transformation unit TU1, TU2 (not shown in Figures 4, 5 and 6) as part of the harmonic current reference controller device as shown in figure 3 according to exemplary embodiments of the invention.

In all these embodiments the error of the force ripple is calculated and a close loop regulation of the force ripple is made so that the Nth harmonic force ripple will follow Nth harmonic force ripple commands OUT 1, OUT2. Thus, the regulators are used to control the force ripple error to zero. The exemplary embodiments shown in figures 4 to 6 rely on a method for providing a harmonic current reference, in particular for controlling force ripples of a generator, the method comprising: obtaining a first input signal IN1 indicative for a radial force ripple of a generator; obtaining a second input signal IN2 indicative for a reference harmonic generator radial force; obtaining a third input signal IN3 indicative for a tangential force ripple of the generator; obtaining a fourth input signal IN4 indicative for a reference harmonic generator tangential force; obtaining a fifth input signal IN5 indicative for an electrical angle of the generator; determining a first internal signal int1 by filtering the first input signal IN1 with taking into account the fifth input signal IN5, the first internal signal int1 being indicative for a radial force ripple comprising only a radial component at a certain harmonic of a generator current; determining a second internal signal int2 by filtering the third input signal IN3 with taking into account the fifth input signal IN5, the second internal signal int2 being indicative for a tangential force ripple comprising only a tangential component at the certain harmonic of the generator current; determining a first output signal OUT1, by a first transformation procedure TP1 making use of the second input signal IN2 and the first internal signal int1, the first output signal OUT1 being indicative for a certain harmonic current reference for a first axle of an synchronous rotating frame; and determining a second output signal OUT2 by a second transformation procedure TP2 making use of the fourth input signal IN4 and the second internal signal int2, the second output signal OUT2 being indicative for a certain harmonic current reference for a second axle of the synchronous rotating frame.
Each of the provided exemplary embodiments shown in figures 4 to 6 provide methods, which are each usable for an occurring Nth harmonic radial force ripple and an occurring Nth harmonic tangential force ripple in the same way.
Therein, the force ripple regulator TU1, TU2 comprises the first transformation procedure TP1, the first transformation procedure TP1 comprising: determining a first error signal err1, by subtracting the first internal signal int1 from the second input signal IN2, the first error signal err1 being indicative for a regulation error of the first internal signal IN1, and determining the first output signal OUT1 by a third transformation procedure TP3, making use of the first error signal err1.
Moreover, the force ripple regulator TU1, TU2 comprises the second transformation procedure TP2, the second transformation procedure TP2 comprising: determining a second error signal err2, by subtracting the second internal signal int2 from the fourth input signal IN4, the second error signal err2 being indicative for a regulation error of the second internal signal int2; and determining the second output signal OUT2, by a fourth transformation procedure TP4, making use of the second error signal err2.

Figure 4 shows a schematically drawing of a force ripple regulator TU1, TU2 of the force ripple controller as shown in figure 3 according to an exemplary embodiment of the invention.
Figure 4 shows an exemplary embodiment, wherein the force ripple regulator is using a resonant regulator. A resonant controller may regulate any harmonic at a certain frequency.
In figure 4 the third transformation procedure TP3 comprises resonance regulating the first error signal err1 by applying a first transfer function to the first error signal err1.
Moreover, the fourth transformation procedure TP4 comprises resonance regulating the second error signal err2 by applying a second transfer function to the second error signal err2.
Therein, the second transfer function equals the first transfer function.

Figure 4 moreover shows the method comprising: regulating the filtered radial force ripple comprises: determining a regulation error of the filtered radial force ripple by adding the reference certain harmonic generator radial force and subtracting the filtered radial force ripple; resonance regulating the regulation error of the filtered radial force ripple by use of a first transfer function, such as to receive the certain harmonic current reference for the first axle of the synchronous rotating frame; and wherein regulating the filtered tangential force ripple comprises: determining a regulation error of the filtered tangential force ripple by adding the reference certain harmonic generator tangential force and subtracting the filtered tangential force ripple; resonance regulating the regulation error of the filtered tangential force ripple by use of a second transfer function, such as to receive the certain harmonic current reference for the second axle of the synchronous rotating frame. Moreover, the second transfer function equals the first transfer function.

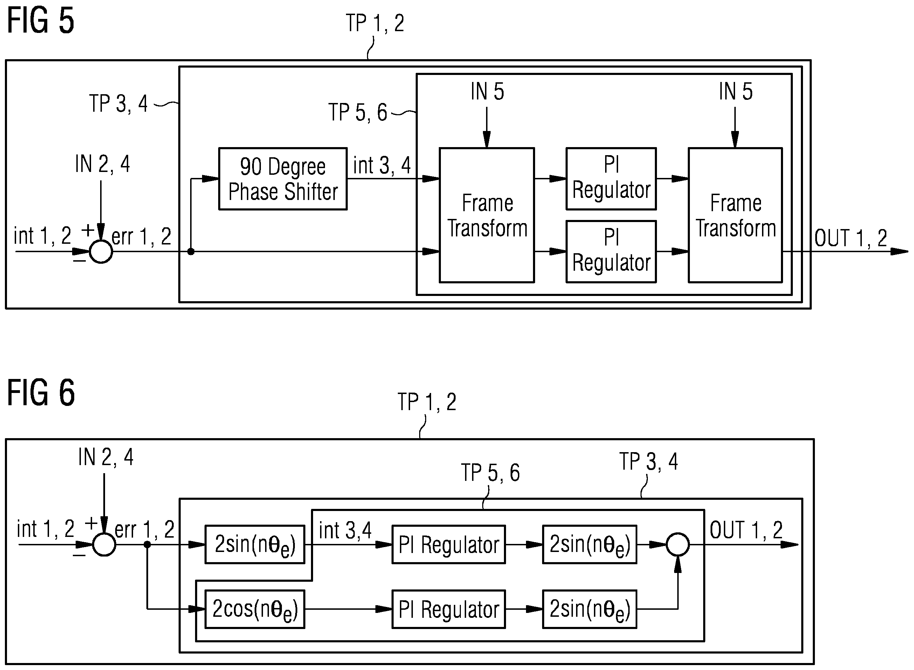

Exemplary embodiments using a force ripple regulator TU1, TU2 based on a vector control principal are shown in figure 5 and figure 6.
In figure 5 and figure 6 the each shown force ripple regulator TU1, TU2 is similar to the force ripple regulator TU1, TU2 shown in figure 4. But instead of using a resonant regulator as the third and fourth transformation procedure TP3, TP4 the third transformation procedure TP3 comprises: splitting the first error signal err1 into two identical split first error signals err1, err1; providing a third internal signal int3 by modifying a first of the two identical split first error signals err1, err1; and determining the first output signal OUT1 by a fifth transformation procedure TP5, making use of the first error signal err1 and the third internal signal int3.
Moreover, in the force ripple regulator TU1, TU2 in figure 5 and figure 6 the fourth transformation procedure TP4 comprises: splitting the second error signal err2 into two identical split second error signals err2, err2; providing a fourth internal signal int4 by modifying a first of the two identical split second error signals err2, err2; and determining the second output signal OUT2 by a sixth transformation procedure TP6, making use of the second error signal err2 and the fourth internal signal int4.

Figure 5 shows a schematically drawing of a force ripple regulator TU1, TU2 of the force ripple controller as shown in figure 3 according to another exemplary embodiment of the invention.
In figure 5 the shown force ripple regulator TU1, TU2 is similar to the force ripple regulator TU1, TU2 moreover comprises: the fifth transformation procedure TP5 comprising: making use of the fifth input signal IN5; and the sixth transformation procedure TP6 comprising: making use of the fifth input signal IN5.
Moreover, in figure 5 modifying the first of the two identical split first error signals err1, err1 comprises applying a first phase shifting procedure, in particular a 90 degrees phase shifting procedure. Moreover, modifying the first of the two identical split second error signals err1, err1 comprises applying a second phase shifting procedure, in particular a 90 degrees phase shifting procedure.
Therefore, In Figure 5, the phase of the regulation error err1, err2 is filtered 90 degree by a phase shifter. This could be achieved by a filter or derivative. The two components may be converted to the Nth rotating frame by Park transformation. With this, simple PI controllers may be used as the regulators in the Nth rotating frame. The outputs of the PI regulators are converted back to the Nth rotating frame as the outputs of the force ripple regulator TU1, TU2.

Figure 5 moreover shows the method comprising: regulating TU1 the filtered radial force ripple int1 comprises: determining a regulation error err1 of the filtered radial force ripple int1 by adding the reference certain harmonic generator radial force IN2 and subtracting the filtered radial force ripple int1; phase shifting the regulation error err1 of the filtered radial force ripple int1; frame transforming the regulation error err1 of the filtered radial force ripple int1 by applying the electrical angle of the generator IN5 to the regulation error err1 of the filtered radial force ripple int1; frame transforming the phase shifted int3 regulation error err1 of the filtered radial force ripple int1 by applying the electrical angle of the generator IN5 to the phase shifted int3 regulation error err1 of the filtered radial force ripple int1; proportional plus integral (PI) regulating the frame transformed regulation error err1 of the filtered radial force ripple int1; proportional plus integral (PI) regulating the frame transformed phase shifted int3 regulation error err1 of the filtered radial force ripple int1; frame transforming the proportional plus integral (PI) regulated frame transformed regulation error err1 of the filtered radial force ripple int1 by applying the negative electrical angle of the generator IN5 to the PI-regulated frame transformed regulation error err1 of the filtered radial force ripple int1; frame transforming the proportional plus integral (PI) regulated frame transformed phase shifted int3 regulation error err1 of the filtered radial force ripple int1 by applying the negative electrical angle of the generator IN5 to the PI-regulated frame transformed phase shifted int3 regulation error err1 of the filtered radial force ripple int1; determining the certain harmonic current reference OUT1 for the first axle of the synchronous rotating frame by applying the frame transformed proportional plus integral (PI) regulated frame transformed phase shifted int3 regulation error err1 of the filtered radial force ripple int1 to the frame transformed proportional plus integral (PI) regulated frame transformed regulation error err1 of the filtered radial force ripple int1; and wherein regulating TU2 the filtered tangential force ripple IN3 comprises: determining a regulation error err2 of the filtered tangential force ripple int2 by adding the reference certain harmonic generator tangential force IN4 and subtracting the filtered tangential force ripple int2; phase shifting the regulation error err2 of the filtered tangential force ripple int2; frame transforming the regulation error err2 of the filtered tangential force ripple int2 by applying the electrical angle of the generator IN5 to the regulation error err2 of the filtered tangential force ripple int2; frame transforming the phase shifted int4 regulation error err2 of the filtered tangential force ripple int2 by applying the electrical angle of the generator IN5 to the phase shifted int4 regulation error err2 of the filtered tangential force ripple int2; proportional plus integral (PI) regulating the frame transformed regulation error err2 of the filtered tangential force ripple int2; proportional plus integral (PI) regulating the frame transformed phase shifted int4 regulation error err2 of the filtered tangential force ripple int2; frame transforming the proportional plus integral (PI) regulated frame transformed regulation error err2 of the filtered tangential force ripple int2 by applying the negative electrical angle of the generator IN5 to the PI-regulated frame transformed regulation error err2 of the filtered tangential force ripple int2; frame transforming the proportional plus integral (PI) regulated frame transformed phase shifted int4 regulation error err2 of the filtered tangential force ripple int2 by applying the negative electrical angle of the generator IN5 to the proportional plus integral (PI) regulated frame transformed phase shifted int4 regulation error err2 of the filtered tangential force ripple int2; determining the certain harmonic current reference OUT2 for the second axle of the synchronous rotating frame by applying the frame transformed proportional plus integral (PI) regulated frame transformed phase shifted int4 regulation error err2 of the filtered tangential force ripple int2 to the frame transformed proportional plus integral (PI) regulated frame transformed regulation error err2 of the filtered tangential force ripple int2.
Furthermore, the first axle of the synchronous rotating frame is a first axle in a direct-quadrature-zero synchronous rotating frame of a park-transformation, and the second axle of the synchronous rotating frame is a second axle in the direct-quadrature-zero synchronous rotating frame of a park-transformation.

Figure 6 shows a schematically drawing of a force ripple regulator TU1, TU2 of the force ripple controller as shown in figure 3 according to another exemplary embodiment of the invention.
As a difference to figure 5, in figure 6 the third transformation procedure TP3 comprises applying a first trigonometric function, and the fourth transformation procedure TP4 comprises applying a second trigonometric function.
Moreover, the method shown in figure 6 comprises: modifying the second of the two identical split first error signals err1, err1; and modifying the second of the two identical split second error signals err2, err2. Therein, modifying the second of the two identical split first error signals err1, err1 comprises applying a third trigonometric function; and modifying the second of the two identical split second error signals err2, err2 comprises applying a fourth trigonometric function.
Moreover, the second trigonometric function equals the first trigonometric function, the fourth trigonometric function equals the third trigonometric function, and the third trigonometric function is different from the first trigonometric function.
Therefore, in Figure 6, another option based on vector control principal is presented. The regulation error passes a sine channel and a cosine channel. Output signals of the sine and cosine channels are summed at a summation element. Therefore, simple PI controllers may be used as the regulators.

Figure 6 moreover shows the method comprising: regulating TU1 the filtered radial force ripple int1 comprises: determining a regulation error err1 of the filtered radial force ripple int1 by adding the reference certain harmonic generator radial force IN2 and subtracting the filtered radial force ripple int1; sinus transforming the regulation error of the filtered radial force ripple by use of a first sinus transformation of the regulation error of the filtered radial force ripple; co-sinus transforming the regulation error of the filtered radial force ripple by use of a first co-sinus transformation of the regulation error of the filtered radial force ripple; proportional plus integral regulating the sinus transformed regulation error of the filtered radial force ripple; proportional plus integral regulating the co-sinus transformed regulation error of the filtered radial force ripple; sinus transforming the proportional plus integral regulated sinus transformed regulation error of the filtered radial force ripple by use of a second sinus transformation of the proportional plus integral regulated sinus transformed regulation error of the filtered radial force ripple; co-sinus transforming the proportional plus integral regulated co-sinus transformed regulation error of the filtered radial force ripple by use of a second co-sinus transformation of the proportional plus integral regulated co-sinus transformed regulation error of the filtered radial force ripple; determining the certain harmonic current reference for the second axle of the synchronous rotating frame by applying the co-sinus transformed proportional plus integral regulated co-sinus transformed regulation error of the filtered radial force ripple to the sinus transformed proportional plus integral regulated sinus transformed regulation error of the filtered radial force ripple; and wherein regulating the filtered tangential force ripple comprises: determining a regulation error of the filtered tangential force ripple by adding the reference certain harmonic generator tangential force and subtracting the filtered tangential force ripple; sinus transforming the regulation error of the filtered tangential force ripple by use of a third sinus transformation of the regulation error of the filtered tangential force ripple; co-sinus transforming the regulation error of the filtered tangential force ripple by use of a third co-sinus transformation of the regulation error of the filtered tangential force ripple; proportional plus integral regulating the sinus transformed regulation error of the filtered tangential force ripple; proportional plus integral regulating the co-sinus transformed regulation error of the filtered tangential force ripple; sinus transforming the proportional plus integral regulated sinus transformed regulation error of the filtered tangential force ripple by use of a fourth sinus transformation of the proportional plus integral regulated sinus transformed regulation error of the filtered tangential force ripple; co-sinus transforming the proportional plus integral regulated co-sinus transformed regulation error of the filtered tangential force ripple, by use of a fourth co-sinus transformation of the proportional plus integral regulated co-sinus transformed regulation error of the filtered tangential force ripple; determining the certain harmonic current reference for the second axle of the synchronous rotating frame by applying the co-sinus transformed proportional plus integral regulated co-sinus transformed regulation error of the filtered tangential force ripple to the sinus transformed proportional plus integral regulated sinus transformed regulation error of the filtered tangential force ripple. Therein, the third sinus transformation equals the first sinus transformation, and the fourth sinus transformation equals the second sinus transformation. Moreover, the third co-sinus transformation equals the first co-sinus transformation, and the fourth co-sinus transformation equals the second co-sinus transformation.

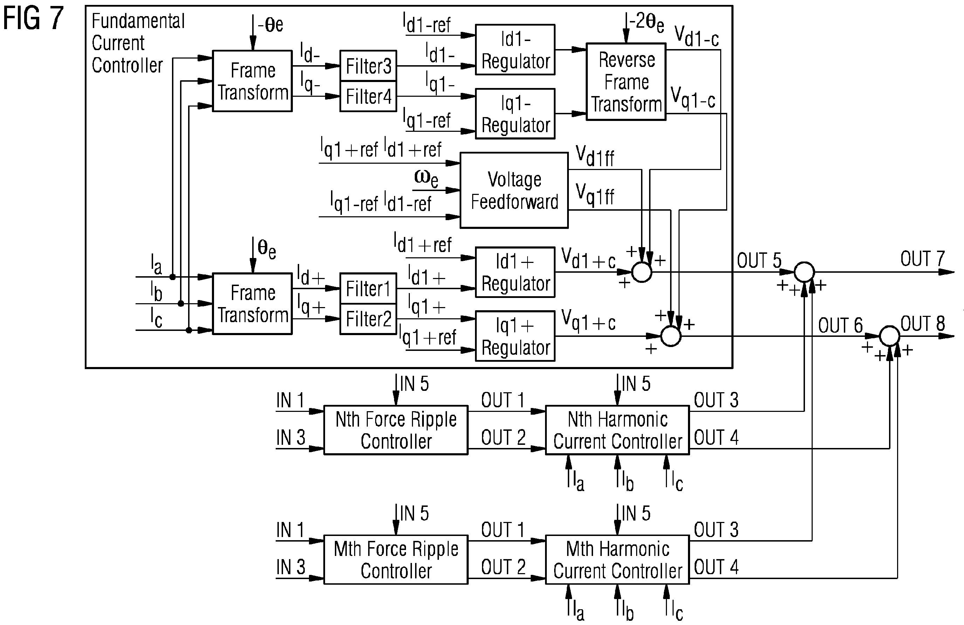

Figure 7 shows a schematically drawing of a current controller as shown in figure 2 for controlling force ripples of the generator as shown in figure 1 together with two force ripple controllers according to an exemplary embodiment of the invention.
In figure 7 is shown a force ripple control method for controlling force ripples of a generator, the method comprising: performing a method for providing a certain harmonic current reference according to any embodiments of the invention. In figure 7 this is achieved by use of two force ripple controllers, one for an Nth force ripple, and another one for an Mth force ripple.
Moreover, the method comprises: determining a third output signal OUT3 and a fourth output signal OUT4 depending on the fifth input signal IN5, the first output signal OUT1, the second output signal OUT2 and a set of current signals Ia, Ib, Ic, the set of current signals Ia, Ib, Ic being indicative for a first current Ia, a second current Ib, and a third current Ic each generated by the generator; the third output signal OUT3 being indicative for a harmonic voltage command for the first axle of the synchronous rotating frame; and the fourth output signal OUT4 being indicative for a harmonic voltage command for the second axle of the synchronous rotating frame.
The method further comprises: determining a seventh output signal OUT7 by adding the third output signal OUT3 to a fifth output signal OUT5, the fifth output signal OUT5 being indicative for a first fundamental voltage command of a current controller of a frequency converter for the generator, and the seventh output signal OUT7 being indicative for a voltage command at the first axle of the synchronous rotating frame, for controlling a radial force ripple of the generator.
The method further comprises: determining an eighth output signal OUT8 by adding the fourth output signal OUT4 to a sixth output signal OUT6, the sixth output signal OUT6 being indicative for a second fundamental voltage command of the current controller of the frequency converter for the generator, and the eighth output signal OUT8 being indicative for a voltage command at the second axle of the synchronous rotating frame, for controlling a tangential force ripple of the generator.
In figure 7 is shown a diagram of two force ripple controllers, two harmonic current controllers and a generator current controller. In the exemplary embodiment of figure 7, the fundamental current controller is configured for using fundamental positive-sequence and negative sequence current references, current feedback signals and a generator electrical frequency in combination with fundamental positive and negative sequence regulators Id1+ regulator, Iq1+ regulator, Id1-regulator, Iq1- regulator and a voltage feed-forward providing fundamental voltage commands OUT 5, OUT 6.
At least one force ripple controller for the force/torque ripples as shown in figure 3 is configured for using the force ripple command (the command is 0 in most of the cases). Measured/estimated force/torque feedback signals and an electrical angle IN5 of the generator in combination with regulators TU1, TU2 (not shown in Figure 7)for controlling force ripples in order to obtain a harmonic current command OUT 1, OUT 2 are used.
At least one unit for calculating a harmonic voltage command Out 3, OUT 4 based on the harmonic current command OUT1, OUT2 is used. This unit called an Nth/Mth harmonic current controller may provide a closed-loop regulation of a harmonic current or an open-loop calculation of a harmonic voltage. Summation elements are configured for adding the voltage commands OUT 2 to OUT 4 and OUT 4 to OUT 6 to achieve the converter control signals OUT 7, OUT 8.
The same configuration may be used for regulating Mth force ripples as shown in Figure 7. If more harmonics need to be controlled, more modules may be added. The outputs OUT 3, OUT 4 from different harmonic current controllers shall be then added together.
In Figure7, the positive-sequence fundamental current controller in a synchronous d-q frame +we is well known.
To regulate a negative-sequence fundamental current, the three-phase current was converted to a rotating frame with - we speed by Park transformation. The fundamental negative-sequence current is converted from ac to dc after the transformation. A PI controller may then be used to regulate the negative current following their references in this rotating frame. For achieving a better dynamic performance and decoupling, voltage feed-forward may also be used in this rotating frame. The outputs of voltage feed-forward and positive and negative sequence current regulators are added together providing the fundamental voltage commands OUT 5, OUT 6.

Figure 7 moreover shows the method comprising: determining a first harmonic voltage command for the first axle of the synchronous rotating frame by applying the electrical angle of the generator, a first current of the generator, a second current of the generator and a third current of the generator to the first harmonic current reference for the first axle of the synchronous rotating frame, such as to receive a first harmonic voltage command for the first axle of the synchronous rotating frame; determining a first harmonic voltage command for the second axle of the synchronous rotating frame by applying the electrical angle of the generator, a first current of the generator, a second current of the generator and a third current of the generator to the first harmonic current reference for the second axle of the synchronous rotating frame, such as to receive a first harmonic voltage command for the second axle of the synchronous rotating frame; adding the first harmonic voltage command for the first axle of the synchronous rotating frame to a fundamental voltage command for the first axle of the synchronous rotating frame, such as to receive a voltage command at the first axle of the synchronous rotating frame, for controlling a radial force ripple of the generator; and adding the first harmonic voltage command for the second axle of the synchronous rotating frame to a fundamental voltage command for the second axle of the synchronous rotating frame, such as to receive a voltage command at the second axle of the synchronous rotating frame, for controlling a tangential force ripple of the generator.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

It should be noted that the term "attaching" may comprise bolting, riveting, welding or any other bonding of two materials, depending of the use of the materials and/or parts attached to each other. Where possible and useful, welding, bolting or riveting may be substituted by each other.
It is noted that it may also be possible in further refinements of the invention to combine features from different illustrative embodiments described herein. It should also be noted that reference signs in the claims should not be construed as limiting the scope of the claims.

In order to recapitulate the above described embodiments of the present invention one can state:
The proposed invention may lead to a reduction of noise and vibration by reducing both torque ripple and radial force pressure harmonics in permanent magnet machines, and particularly in brushless permanent magnet machines. With this, acoustic noise and vibration can be at least reduced in an efficient way, by using control methods that can at least minimize the excitation source, the torque ripples and radial force ripples. Therefore, it may be possible to measure or estimate force ripples of the generator in a very efficient way and use them as a feedback source so that both torque ripples and radial force ripples can be minimized. By doing this, additional costs may be minimized as well. Moreover, there is no need to change an available hardware design. Therefore, the present invention describes a method for controlling harmonic current of a wind turbine so that noise and vibration of the generator can be reduced. A frequency converter can inject harmonic currents to the machine stator so that both, torque ripples and radial force ripples can be minimized.
Therefore, the present invention may aid in reducing acoustic noise and vibration of such a permanent magnet machine, may minimize torque ripples as well as radial force pressure ripples. Moreover, nearly no additional costs may be spent as the invention does allow for only minimal change requirements for hardware of available products already in the market. Moreover, the presented invention allows for very low additional losses due to low amplitude of the harmonic current.

## Claims

1. A method for providing a harmonic current reference, in particular for controlling force ripples of a generator, the method comprising:
- obtaining a first input signal (IN1) indicative for a radial force ripple of a generator,
- obtaining a second input signal (IN2) indicative for a reference of the harmonic generator radial force,
- obtaining a third input signal (IN3) indicative for a tangential force ripple of the generator,
- obtaining a fourth input signal (IN4) indicative for a reference of the harmonic generator tangential force,
- obtaining a fifth input signal (IN5) indicative for an electrical angle of the generator,
- determining a first internal signal (int1), by filtering the first input signal (IN1) with taking into account the fifth input signal (IN5), the first internal signal (int1) being indicative for a radial force ripple comprising only a first harmonic component at a certain harmonic of a generator current,
- determining a second internal signal (int2) by filtering the third input signal (IN3) with taking into account the fifth input signal (IN5), the second internal signal (int2) being indicative for a tangential force ripple comprising only a second harmonic component at the certain harmonic of the generator current,
- determining a first output signal (OUT1), by a first transformation procedure (TP1) making use of the second input signal (IN2) and the first internal signal (int1), the first output signal (OUT1) being indicative for a certain harmonic current reference for a first axle of an synchronous rotating frame, and
- determining a second output signal (OUT2) by a second transformation procedure (TP2) making use of the fourth input signal (IN4) and the second internal signal (int2), the second output signal (OUT2) being indicative for a certain harmonic current reference for a second axle of the synchronous rotating frame.

2. The method as set forth in preceding claim 1,
the first transformation procedure (TP1) comprising:
- determining a first error signal (err1) by subtracting the first internal signal (int1) from the second input signal (IN2), the first error signal (err1) being indicative for a regulation error of the first internal signal (IN1), and
- determining the first output signal (OUT1) by a third transformation procedure (TP3), making use of the first error signal (err1); and
the second transformation procedure (TP2) comprising:
- determining a second error signal (err2) by subtracting the second internal signal (int2) from the fourth input signal (IN4), the second error signal (err2) being indicative for a regulation error of the second internal signal (int2), and
- determining the second output signal (OUT2) by a fourth transformation procedure (TP4), making use of the second error signal (err2).

3. The method as set forth in preceding claim 2,
the third transformation procedure (TP3) comprising:
- splitting the first error signal (err1) into two identical split first error signals (err1, err1),
- providing a third internal signal (int3) by modifying a first of the two identical split first error signals (err1, err1), and
- determining the first output signal (OUT1) by a fifth transformation procedure (TP5), making use of the first error signal (err1) and the third internal signal (int3); and
the fourth transformation procedure (TP4) comprising:
- splitting the second error signal (err2) into two identical split second error signals (err2, err2),
- providing a fourth internal signal (int4) by modifying a first of the two identical split second error signals (err2, err2), and
- determining the second output signal (OUT2) by a sixth transformation procedure (TP6), making use of the second error signal (err2) and the fourth internal signal (int4).

4. The method as set forth in preceding claim 3,
the fifth transformation procedure (TP5) comprising:
- making use of the fifth input signal (IN5), and
the sixth transformation procedure (TP6) comprising:
- making use of the fifth input signal (IN5).

5. The method as set forth in preceding claim 4, wherein modifying the first of the two identical split first error signals (err1, err1) comprises
- applying a first phase shifting procedure, in particular a 90 degrees phase shifting procedure, and
modifying the first of the two identical split second error signals (err1, err1) comprises
- applying a second phase shifting procedure, in particular a 90 degrees phase shifting procedure.

6. The method as set forth in preceding claim 3,
the third transformation procedure (TP3) comprising:
- applying a first trigonometric function, and
the fourth transformation procedure (TP4) comprising:
- applying a second trigonometric function.

7. The method as set forth in preceding claim 6, moreover comprising:
- modifying the second of the two identical split first error signals (err1, err1), and
- modifying the second of the two identical split second error signals (err2, err2),
wherein
modifying the second of the two identical split first error signals (err1, err1) comprises
- applying a third trigonometric function, and modifying the second of the two identical split second error signals (err2, err2) comprises
- applying a fourth trigonometric function.

8. The method as set forth in preceding claims 7, wherein the second trigonometric function equals the first trigonometric function,
the fourth trigonometric function equals the third trigonometric function, and
the third trigonometric function is different from the first trigonometric function.

9. The method as set forth in preceding claim 2,
the third transformation procedure (TP3) comprising:
- resonance regulating the first error signal (err1) by applying a first transfer function to the first error signal (err1); and
the fourth transformation procedure (TP4) comprising:
- resonance regulating the second error signal (err2), by applying a second transfer function to the second error signal (err2).

10. The method as set forth in preceding claim 9, wherein the second transfer function equals the first transfer function.

11. A force ripple control method for controlling force ripples of a generator, the method comprising:
- performing a method for providing a certain harmonic current reference according to any of the claims 1 to 10,
- determining a third output signal (OUT3) and a fourth output signal (OUT4) depending on the fifth input signal (IN5), the first output signal (OUT1), the second output signal (OUT2) and a set of current signals (Ia, Ib, Ic), the set of current signals (Ia, Ib, Ic) being indicative for a first current (Ia), a second current (Ib), and a third current (Ic) each generated by the generator,
the third output signal (OUT3) being indicative for a harmonic voltage command for the first axle of the synchronous rotating frame, and
the fourth output signal (OUT4) being indicative for a harmonic voltage command for the second axle of the synchronous rotating frame,
- determining a seventh output signal (OUT7) by adding the third output signal (OUT3) to a fifth output signal (OUT5), the fifth output signal (OUT5) being indicative for a first fundamental voltage command of a current controller of a frequency converter for the generator, and
the seventh output signal (OUT7) being indicative for a voltage command at the first axle of the synchronous rotating frame, for controlling a radial force ripple of the generator, and
- determining an eighth output signal (OUT8) by adding the fourth output signal (OUT4) to a sixth output signal (OUT6), the sixth output signal (OUT6) being indicative for a second fundamental voltage command of the current controller of the frequency converter for the generator, and
the eighth output signal (OUT8) being indicative for a voltage command at the second axle of the synchronous rotating frame, for controlling a tangential force ripple of the generator.

12. A harmonic current reference controller device for controlling force ripples of a generator, the controller device comprising:
- a first input for obtaining a first input signal (IN1) indicative for a radial force ripple of a generator,
- a second input for obtaining a second input signal (IN2) indicative for a reference harmonic generator radial force,
- a third input for obtaining a third input signal (IN3) indicative for a tangential force ripple of the generator,
- a fourth input for obtaining a fourth input signal (IN4) indicative for a reference harmonic generator tangential force,
- a fifth input for obtaining a fifth input signal (IN5) indicative for an electrical angle of the generator,
- a first filter unit (FU1) for determining a first internal signal (int1) by filtering the first input signal (IN1) by taking into account the fifth input signal (IN5), the first internal signal (int1) being indicative for a radial force ripple comprising only a first harmonic component at a certain harmonic of a generator current,
- a second filter unit (FU2) for determining a second internal signal (int2) by filtering the third input signal (IN3) by taking into account the fifth input signal (IN5), the second internal signal (int2) being indicative for a tangential force ripple comprising only a second harmonic component at the certain harmonic of the generator current,
- a first transformation unit (TU1) for determining a first output signal (OUT1) by a first transformation procedure (TP1) making use of the second input signal (IN2) and the first internal signal (int1), the first output signal (OUT1) being indicative for a certain harmonic current reference for a first axle of a synchronous rotating frame, and
- a second transformation unit (TU2) for determining a second output signal (OUT2) by a second transformation procedure (TP2) making use of the fourth input signal (IN4) and the second internal signal (int2), the second output signal (OUT2) being indicative for a certain harmonic current reference for a second axle of the synchronous rotating frame.

13. The harmonic current reference controller device as set forth in preceding claim 12, the device being adapted for performing a method for providing a harmonic current reference according to any of the claims 1 to 10.

## Patentansprüche

1. Verfahren zur Bereitstellung einer Oberschwingungsstromreferenz, insbesondere zur Steuerung der Kraftwelligkeit eines Generators, wobei das Verfahren Folgendes umfasst:
- Erlangen eines ersten Eingangssignals (IN1), das eine radiale Kraftwelligkeit eines Generators angibt,
- Erlangen eines zweiten Eingangssignals (IN2), das eine Oberschwingungsreferenz der Generatorradialkraft angibt,
- Erlangen eines dritten Eingangssignals (IN3), das eine tangentiale Kraftwelligkeit des Generators angibt,
- Erlangen eines vierten Eingangssignals (IN4), das eine Oberschwingungsreferenz der Generatortangentialkraft angibt,
- Erlangen eines fünften Eingangssignals (IN5), das einen elektrischen Winkel des Generators angibt,
- Bestimmen eines ersten internen Signals (int1), indem das erste Eingangssignal (IN1) unter Berücksichtigung des fünften Eingangssignals (IN5) gefiltert wird, wobei das erste interne Signal (int1) eine radiale Kraftwelligkeit angibt, die nur eine erste Oberschwingungskomponente bei einer bestimmten Oberschwingung eines Generatorstroms angibt,
- Bestimmen eines zweiten internen Signals (int2), indem das dritte Eingangssignal (IN3) unter Berücksichtigung des fünften Eingangssignals (IN5) gefiltert wird, wobei das zweite interne Signal (int2) eine tangentiale Kraftwelligkeit angibt, die nur eine zweite Oberschwingungskomponente bei der bestimmten Oberschwingung des Generatorstroms angibt,
- Bestimmen eines ersten Ausgangssignals (OUT1) durch eine erste Transformationsprozedur (TP1), die das zweite Eingangssignal (IN2) und das erste interne Signal (int1) nutzt, wobei das erste Ausgangssignal (OUT1) eine bestimmte Oberschwingungsstromreferenz für eine erste Achse eines synchronen rotierenden Rahmens angibt, und
- Bestimmen eines zweiten Ausgangssignals (OUT2) durch eine zweite Transformationsprozedur (TP2), die das vierte Eingangssignal (IN4) und das zweite interne Signal (int2) nutzt, wobei das zweite Ausgangssignal (OUT2) eine bestimmte Oberschwingungsstromreferenz für eine zweite Achse des synchronen rotierenden Rahmens angibt.

2. Verfahren nach Anspruch 1,
wobei die erste Transformationsprozedur (TP1) Folgendes umfasst:
- Bestimmen eines ersten Fehlersignals (err1) durch Subtrahieren des ersten internen Signals (int1) von dem zweiten Eingangssignal (IN2), wobei das erste Fehlersignal (err1) einen Regelungsfehler des ersten internen Signals (IN1) angibt, und
- Bestimmen des ersten Ausgangssignals (OUT1) durch eine dritte Transformationsprozedur (TP3), die das erste Fehlersignal (err1) nutzt; und
wobei die zweite Transformationsprozedur (TP2) Folgendes umfasst:
- Bestimmen eines zweiten Fehlersignals (err2) durch Subtrahieren des zweiten internen Signals (int2) von dem vierten Eingangssignal (IN4), wobei das zweite Fehlersignal (err2) einen Regelungsfehler des zweiten internen Signals (int2) angibt, und
- Bestimmen des zweiten Ausgangssignals (OUT2) durch eine vierte Transformationsprozedur (TP4), die das zweite Fehlersignal (err2) nutzt.

3. Verfahren nach Anspruch 2,
wobei die dritte Transformationsprozedur (TP3) Folgendes umfasst:
- Aufteilen des ersten Fehlersignals (err1) in zwei identische aufgeteilte erste Fehlersignale (err1, err1),
- Bereitstellen eines dritten internen Signals (int3) durch Modifizieren eines ersten der beiden identischen aufgeteilten ersten Fehlersignale (err1, err1), und
- Bestimmen des ersten Ausgangssignals (OUT1) durch eine fünfte Transformationsprozedur (TP5), die das erste Fehlersignal (err1) und das dritte interne Signal (int3) nutzt; und
wobei die vierte Transformationsprozedur (TP4) Folgendes umfasst:
- Aufteilen des zweiten Fehlersignals (err2) in zwei identische aufgeteilte zweite Fehlersignale (err2, err2),
- Bereitstellen eines vierten internen Signals (int4) durch Modifizieren eines ersten der beiden identischen aufgeteilten zweiten Fehlersignale (err2, err2), und
- Bestimmen des zweiten Ausgangssignals (OUT2) durch eine sechste Transformationsprozedur (TP6), die das zweite Fehlersignal (err2) und das vierte interne Signal (int4) nutzt.

4. Verfahren nach Anspruch 3,
wobei die fünfte Transformationsprozedur (TP5) Folgendes umfasst:
- Nutzen des fünften Eingangssignals (IN5), und wobei die sechste Transformationsprozedur (TP6) Folgendesumfasst:
- Nutzen des fünften Eingangssignals (IN5).

5. Verfahren nach Anspruch 4, wobei
das Modifizieren des ersten der beiden identischen aufgeteilten ersten Fehlersignale (err1, err1) Folgendes umfasst:
- Anwenden einer ersten Phasenverschiebungsprozedur, insbesondere einer 90-Grad-Phasenverschiebungsprozedur, und
wobei das Modifizieren des ersten der beiden identischen aufgeteilten zweiten Fehlersignale (err1, err1) Folgendes umfasst:
- Anwenden einer zweiten Phasenverschiebungsprozedur, insbesondere einer 90-Grad-Phasenverschiebungsprozedur.

6. Verfahren nach Anspruch 3,
wobei die dritte Transformationsprozedur (TP3) Folgendes umfasst:
- Anwenden einer ersten trigonometrischen Funktion, und wobei die vierte Transformationsprozedur (TP4) Folgendes umfasst:
- Anwenden einer zweiten trigonometrischen Funktion.

7. Verfahren nach Anspruch 6, weiterhin umfassend:
- Modifizieren des zweiten der beiden identischen aufgeteilten ersten Fehlersignale (err1, err1), und
- Modifizieren des zweiten der beiden identischen aufgeteilten zweiten Fehlersignals (err2, err2),
wobei
das Modifizieren des zweiten der beiden identischen aufgeteilten ersten Fehlersignale (err1, err1) Folgendes umfasst:
- Anwenden einer dritten trigonometrischen Funktion, und wobei das Modifizieren des zweiten der beiden identischen aufgeteilten zweiten Fehlersignale (err2, err2) Folgendes umfasst:
- Anwenden einer vierten trigonometrischen Funktion.

8. Verfahren nach Anspruch 7, wobei
die zweite trigonometrische Funktion gleich der ersten trigonometrischen Funktion ist,
die vierte trigonometrische Funktion gleich der dritten trigonometrischen Funktion ist, und
die dritte trigonometrische Funktion sich von der ersten trigonometrischen Funktion unterscheidet.

9. Verfahren nach Anspruch 2,
wobei die dritte Transformationsprozedur (TP3) Folgendes umfasst:
- Resonanzregulierung des ersten Fehlersignals (err1) durch Anwenden einer ersten Transferfunktion auf das erste Fehlersignal (err1); und
wobei die vierte Transformationsprozedur (TP4) Folgendes umfasst:
- Resonanzregulierung des zweiten Fehlersignals (err2) durch Anwenden einer zweiten Transferfunktion auf das zweite Fehlersignal (err2).

10. Verfahren nach Anspruch 9, wobei die zweite Transferfunktion gleich der ersten Transferfunktion ist.

11. Kraftwelligkeitssteuerungsverfahren zum Steuerung der Kraftwelligkeit eines Generators, wobei das Verfahren Folgendes umfasst:
- Durchführen eines Verfahrens zur Bereitstellung einer bestimmten Oberschwingungsstromreferenz nach einem der Ansprüche 1 bis 10,
- Bestimmen eines dritten Ausgangssignals (OUT3) und eines vierten Ausgangssignals (OUT4) abhängig von dem fünften Eingangssignal (IN5), dem ersten Ausgangssignal (OUT1), dem zweiten Ausgangssignal (OUT2) und einem Satz von Stromsignalen (Ia, Ib, Ic), wobei der Satz von Stromsignalen (Ia, Ib, Ic) einen ersten Strom (Ia), einen zweiten Strom (Ib) und einen dritten Strom (Ic) angibt, die jeweils durch den Generator erzeugt werden, wobei das dritte Ausgangssignal (OUT3) einen Oberschwingungspannungsbefehl für die erste Achse des synchronen rotierenden Rahmens angibt, und
wobei das vierte Ausgangssignal (OUT4) einen Oberschwingungsspannungsbefehl für die zweite Achse des synchronen rotierenden Rahmens angibt,
- Bestimmen eines siebten Ausgangssignals (OUT7) durch Addieren des dritten Ausgangssignals (OUT3) zu einem fünften Ausgangssignal (OUT5), wobei das fünfte Ausgangssignal (OUT5) einen ersten Fundamentalspannungsbefehl eines Stromreglers eines Frequenzumrichters für den Generator angibt, und wobei das siebte Ausgangssignal (OUT7) einen Spannungsbefehl an der ersten Achse des synchronen rotierenden Rahmens angibt, um eine radiale Kraftwelligkeit des Generators zu steuern, und
- Bestimmen eines achten Ausgangssignals (OUT8) durch Addieren des vierten Ausgangssignals (OUT4) zu einem sechsten Ausgangssignal (OUT6), wobei das sechste Ausgangssignal (OUT6) einen zweiten Fundamentalspannungsbefehl des Stromreglers des Frequenzumrichters für den Generator angibt, und wobei das achte Ausgangssignal (OUT8) einen Spannungsbefehl an der zweiten Achse des synchronen rotierenden Rahmens angibt, um eine tangentiale Kraftwelligkeit des Generators zu steuern.

12. Oberschwingungsstromreferenz-Steuerungsvorrichtung zur Steuerung der Kraftwelligkeit eines Generators, wobei die Steuerungsvorrichtung Folgendes umfasst:
- einen ersten Eingang zum Erlangen eines ersten Eingangssignals (IN1), das eine radiale Kraftwelligkeit eines Generators angibt,
- einen zweiten Eingang zum Erlangen eines zweiten Eingangssignals (IN2), das eine Oberschwingungsreferenz der Generatorradialkraft angibt,
- einen dritten Eingang zum Erlangen eines dritten Eingangssignals (IN3), das eine tangentiale Kraftwelligkeit des Generators angibt,
- einen vierten Eingang zum Erlangen eines vierten Eingangssignals (IN4), das eine Oberschwingungsreferenz der Generatortangentialkraft angibt,
- einen fünften Eingang zum Erlangen eines fünften Eingangssignals (IN5), das einen elektrischen Winkel des Generators angibt,
- eine erste Filtereinheit (FU1) zum Bestimmen eines ersten internen Signals (int1), indem das erste Eingangssignal (IN1) unter Berücksichtigung des fünften Eingangssignals (IN5) gefiltert wird, wobei das erste interne Signal (int1) eine radiale Kraftwelligkeit angibt, die nur eine erste Oberschwingungskomponente bei einer bestimmten Oberschwingung eines Generatorstroms angibt,
- eine zweite Filtereinheit (FU2) zum Bestimmen eines zweiten internen Signals (int2), indem das dritte Eingangssignal (IN3) unter Berücksichtigung des fünften Eingangssignals (IN5) gefiltert wird, wobei das zweite interne Signal (int2) eine tangentiale Kraftwelligkeit angibt, die nur eine zweite Oberschwingungskomponente bei der bestimmten Oberschwingung des Generatorstroms angibt,
- eine erste Transformationseinheit (TU1) zum Bestimmen eines ersten Ausgangssignals (OUT1) durch eine erste Transformationsprozedur (TP1), die das zweite Eingangssignal (IN2) und das erste interne Signal (int1) nutzt, wobei das erste Ausgangssignal (OUT1) eine bestimmte Oberschwingungsstromreferenz für eine erste Achse eines synchronen rotierenden Rahmens angibt, und
- eine zweite Transformationseinheit (TU2) zum Bestimmen eines zweiten Ausgangssignals (OUT2) durch eine zweite Transformationsprozedur (TP2), die das vierte Eingangssignal (IN4) und das zweite interne Signal (int2) nutzt, wobei das zweite Ausgangssignal (OUT2) eine bestimmte Oberschwingungsstromreferenz für eine zweite Achse des synchronen rotierenden Rahmens angibt.

13. Oberschwingungsstromreferenz-Steuerungsvorrichtung nach Anspruch 12, wobei die Vorrichtung dafür ausgelegt ist, ein Verfahren zum Bereitstellen einer Oberschwingungsreferenz nach einem der Ansprüche 1 bis 10 durchzuführen.

## Revendications

1. Un procédé de fourniture d'une référence de courant harmonique, plus particulièrement de commande d'ondulations de force d'un générateur, le procédé comprenant :
- l'obtention d'un premier signal en entrée (IN1) indicatif d'une ondulation de force radiale d'un générateur,
- l'obtention d'un deuxième signal en entrée (IN2) indicatif d'une référence de la force radiale du générateur d'harmoniques,
- l'obtention d'un troisième signal en entrée (IN3) indicatif d'une ondulation de force tangentielle du générateur,
- l'obtention d'un quatrième signal en entrée (IN4) indicatif d'une référence de la force tangentielle du générateur d'harmoniques,
- l'obtention d'un cinquième signal en entrée (IN5) indicatif d'un angle électrique du générateur,
- la détermination d'un premier signal interne (int1) par le filtrage du premier signal en entrée (IN1) avec la prise en compte du cinquième signal en entrée (IN5), le premier signal interne (int1) étant indicatif d'une ondulation de force radiale comprenant uniquement une première composante harmonique à une harmonique donnée d'un courant de générateur,
- la détermination d'un deuxième signal interne (int2) par le filtrage du troisième signal en entrée (IN3) avec la prise en compte du cinquième signal en entrée (IN5), le deuxième signal interne (int2) étant indicatif d'une ondulation de force tangentielle comprenant uniquement une deuxième composante harmonique à l'harmonique donnée du courant de générateur,
- la détermination d'un premier signal en sortie (OUT1) par une première procédure de transformation (TP1) faisant usage du deuxième signal en entrée (IN2) et du premier signal interne (int1), le premier signal en sortie (OUT1) étant indicatif d'une référence de courant harmonique donnée pour un premier axe d'un châssis rotatif synchrone, et
- la détermination d'un deuxième signal en sortie (OUT2) par une deuxième procédure de transformation (TP2) faisant usage du quatrième signal en entrée (IN4) et du deuxième signal interne (int2), le deuxième signal en sortie (OUT2) étant indicatif d'une référence de courant harmonique donnée pour un deuxième axe du châssis rotatif synchrone.

2. Le procédé selon la revendication 1,
la première procédure de transformation (TP1) comprenant :
- la détermination d'un premier signal d'erreur (err1) par la soustraction du premier signal interne (int1) du deuxième signal en entrée (IN2), le premier signal d'erreur (err1) étant indicatif d'une erreur de régulation du premier signal interne (IN1), et
- la détermination du premier signal en sortie (OUT1) par une troisième procédure de transformation (TP3) faisant usage du premier signal d'erreur (err1), et la deuxième procédure de transformation (TP2) comprenant :
- la détermination d'un deuxième signal d'erreur (err2) par la soustraction du deuxième signal interne (int2) du quatrième signal en entrée (IN4), le deuxième signal d'erreur (err2) étant indicatif d'une erreur de régulation du deuxième signal interne (int2), et
- la détermination du deuxième signal en sortie (OUT2) par une quatrième procédure de transformation (TP4) faisant usage du deuxième signal d'erreur (err2).

3. Le procédé selon la revendication 2,
la troisième procédure de transformation (TP3) comprenant :
- la division du premier signal d'erreur (err1) en deux premiers signaux d'erreur divisés identiques (err1, err1),
- la fourniture d'un troisième signal interne (int3) par la modification d'un premier signal des deux premiers signaux d'erreur divisés identiques (err1, err1), et
- la détermination du premier signal en sortie (OUT1) par une cinquième procédure de transformation (TP5) faisant usage du premier signal d'erreur (err1) et du troisième signal interne (int3), et
la quatrième procédure de transformation (TP4) comprenant :
- la division du deuxième signal d'erreur (err2) en deux deuxièmes signaux d'erreur divisés identiques (err2, err2),
- la fourniture d'un quatrième signal interne (int4) par la modification d'un premier signal des deux deuxièmes signaux d'erreur divisés identiques (err2, err2), et
- la détermination du deuxième signal en sortie (OUT2) par une sixième procédure de transformation (TP6) faisant usage du deuxième signal d'erreur (err2) et du quatrième signal interne (int4).

4. Le procédé selon la revendication 3,
la cinquième procédure de transformation (TP5) comprenant :
- l'utilisation du cinquième signal en entrée (IN5), et la sixième procédure de transformation (TP6) comprenant :
- l'utilisation du cinquième signal en entrée (IN5).

5. Le procédé selon la revendication 4, dans lequel la modification du premier signal des deux premiers signaux d'erreur divisés identiques (err1, err1) comprend
- l'application d'une première procédure de déphasage, plus particulièrement d'une procédure de déphasage de 90 degrés, et
la modification du premier signal des deux deuxièmes signaux d'erreur divisés identiques (err1, err1) comprend
- l'application d'une deuxième procédure de déphasage, plus particulièrement d'une procédure de déphasage de 90 degrés.

6. Le procédé selon la revendication 3,
la troisième procédure de transformation (TP3) comprenant :
- l'application d'une première fonction trigonométrique, et
la quatrième procédure de transformation (TP4) comprenant :
- l'application d'une deuxième fonction trigonométrique.

7. Le procédé selon la revendication 6, comprenant en outre :
- la modification du deuxième signal des deux premiers signaux d'erreur divisés identiques (err1, err1), et
- la modification du deuxième signal des deux deuxièmes signaux d'erreur divisés identiques (err2, err2),
dans lequel
la modification du deuxième signal des deux premiers signaux d'erreur divisés identiques (err1, err1) comprend
- l'application d'une troisième fonction trigonométrique, et
la modification du deuxième signal des deux deuxièmes signaux d'erreur divisés identiques (err2, err2) comprend
- l'application d'une quatrième fonction trigonométrique.

8. Le procédé selon la revendication 7, dans lequel la deuxième fonction trigonométrique est identique à la première fonction trigonométrique,
la quatrième fonction trigonométrique est identique à la troisième fonction trigonométrique, et
la troisième fonction trigonométrique est différente de la première fonction trigonométrique.

9. Le procédé selon la revendication 2,
la troisième procédure de transformation (TP3) comprenant :
- la régulation par résonance du premier signal d'erreur (err1) par l'application d'une première fonction de transfert au premier signal d'erreur (err1), et
la quatrième procédure de transformation (TP4) comprenant :
- la régulation par résonance du deuxième signal d'erreur (err2) par l'application d'une deuxième fonction de transfert au deuxième signal d'erreur (err2).

10. Le procédé selon la revendication 9, dans lequel la deuxième fonction de transfert est identique à la première fonction de transfert.

11. Un procédé de commande d'ondulation de force destiné à la commande d'ondulations de force d'un générateur, le procédé comprenant :
- l'exécution d'un procédé de fourniture d'une référence de courant harmonique donnée selon l'une quelconque des revendications 1 à 10,
- la détermination d'un troisième signal en sortie (OUT3) et d'un quatrième signal en sortie (OUT4) en fonction du cinquième signal en entrée (IN5), du premier signal en sortie (OUT1), du deuxième signal en sortie (OUT2) et d'un ensemble de signaux de courant (Ia, Ib, Ic), l'ensemble de signaux de courant (Ia, Ib, Ic) étant indicatif d'un premier courant (Ia), d'un deuxième courant (Ib) et d'un troisième courant (Ic), chacun d'eux étant généré par le générateur,
le troisième signal en sortie (OUT3) étant indicatif d'une commande de tension d'harmonique pour le premier axe du châssis rotatif synchrone, et
le quatrième signal en sortie (OUT4) étant indicatif d'une commande de tension d'harmonique pour le deuxième axe du châssis rotatif synchrone,
- la détermination d'un septième signal en sortie (OUT7) par l'ajout du troisième signal en sortie (OUT3) à un cinquième signal en sortie (OUT5), le cinquième signal en sortie (OUT5) étant indicatif d'une première commande de tension fondamentale d'un dispositif de commande de courant d'un convertisseur de fréquence pour le générateur, et
le septième signal en sortie (OUT7) étant indicatif d'une commande de tension au niveau du premier axe du châssis rotatif synchrone, de façon à commander une ondulation de force radiale du générateur, et
- la détermination d'un huitième signal en sortie (OUT8) par l'ajout du quatrième signal en sortie (OUT4) à un sixième signal en sortie (OUT6), le sixième signal en sortie (OUT6) étant indicatif d'une deuxième commande de tension fondamentale du dispositif de commande de courant du convertisseur de fréquence pour le générateur, et
le huitième signal en sortie (OUT8) étant indicatif d'une commande de tension au niveau du deuxième axe du châssis rotatif synchrone, de façon à commander une ondulation de force tangentielle du générateur.

12. Un dispositif de commande de référence de courant harmonique destiné à la commande d'ondulations de force d'un générateur, le dispositif de commande comprenant :
- une première entrée destinée à l'obtention d'un premier signal en entrée (IN1) indicatif d'une ondulation de force radiale d'un générateur,
- une deuxième entrée destinée à l'obtention d'un deuxième signal en entrée (IN2) indicatif d'une force radiale de générateur d'harmoniques de référence,
- une troisième entrée destinée à l'obtention d'un troisième signal en entrée (IN3) indicatif d'une ondulation de force tangentielle du générateur,
- une quatrième entrée destinée à l'obtention d'un quatrième signal en entrée (IN4) indicatif d'une force tangentielle de générateur d'harmoniques de référence,
- une cinquième entrée destinée à l'obtention d'un cinquième signal en entrée (IN5) indicatif d'un angle électrique du générateur,
- une première unité de filtrage (FU1) destinée à la détermination d'un premier signal interne (int1) par le filtrage du premier signal en entrée (IN1) par la prise en compte du cinquième signal en entrée (IN5), le premier signal interne (int1) étant indicatif d'une ondulation de force radiale comprenant uniquement une première composante harmonique à une harmonique donnée d'un courant de générateur,
- une deuxième unité de filtrage (FU2) destinée à la détermination d'un deuxième signal interne (int2) par le filtrage du troisième signal en entrée (IN3) par la prise en compte du cinquième signal en entrée (IN5), le deuxième signal interne (int2) étant indicatif d'une ondulation de force tangentielle comprenant uniquement une deuxième composante harmonique à l'harmonique donnée du courant de générateur,
- une première unité de transformation (TU1) destinée à la détermination d'un premier signal en sortie (OUT1) par une première procédure de transformation (TP1) faisant usage du deuxième signal en entrée (IN2) et du premier signal interne (int1), le premier signal en sortie (OUT1) étant indicatif d'une référence de courant harmonique donnée pour un premier axe d'un châssis rotatif synchrone, et
- une deuxième unité de transformation (TU2) destinée à la détermination d'un deuxième signal en sortie (OUT2) par une deuxième procédure de transformation (TP2) faisant usage du quatrième signal en entrée (IN4) et du deuxième signal interne (int2), le deuxième signal en sortie (OUT2) étant indicatif d'une référence de courant harmonique donnée pour un deuxième axe du châssis rotatif synchrone.

13. Le dispositif de commande de référence de courant harmonique selon la revendication 12, le dispositif étant adapté à l'exécution d'un procédé de fourniture d'une référence de courant harmonique selon l'une quelconque des revendications 1 à 10.
